# EUROPEAN PATENT APPLICATION

(11) **EP 4 428 637 A1**
(43) Date of publication of application: **11.09.2024**
(21) Application number: 23160824.1
(22) Date of filing: 08.03.2023
(51) Int. Cl.: G05B 17/02

(54) **SIMULATING AUTOMATION BEHAVIOR**

(71) Applicant: OMRON Corporation, Shiokoji-dori, Shimogyo-Ku Kyoto-shi Kyoto 600-8530 (JP)
(72) Inventor: Acosta Plans, Lazaro Eugenio, 08019 Barcelona (ES); Witer, Szymon, 08019 Barcelona (ES); Llibre Tur, Pere, 08019 Barcelona (ES)
(74) Representative: Horn Kleimann Waitzhofer Schmid-Dreyer Patent- und Rechtsanwälte PartG mbB

(57) **Abstract**

A method (10) of simulating an action performed by an automation device (14) on at least one object (22) in a simulation space (12), wherein each object is defined by an object parameter set that represents at least one physical property of the respective object, the method comprising:
defining (S12) an automation volume (24) in the simulation space, which represents an automation interface of the automation device;
defining (S16) an automation pattern (28), which represents an automation behavior of the automation device;
setting (S28) a respective initial object parameter set to each of the at least one object; and
performing (S42) a simulation covering a simulated time, including the steps:
determining (S50), whether the at least one object is contacting the automation volume; and
modifying (S52) the object parameter set of each object, that is determined to contact the automation volume, according to the automation pattern.

## Description

The present invention relates to a method for simulating an action performed by an automation device on at least one object in a simulation space. Further, the present invention relates to a computer program product.

One example for simulation methods are X-in-the-loop simulations, where at least one part of a closed control circuit, such as a controlled system, a sensor, a controller and/or an actuator is simulated. For example, document US 2022/171907 A1 discloses a method comprising: receiving, via a first component in a production environment, a sensor measurement corresponding to a second component in the production environment; identifying a first digital twin corresponding to the first component; applying a perception algorithm to identify a component type associated with the second component; selecting a second digital twin based on the component type; selecting a third digital twin modeling interactions between the first digital twin and the second digital twin; using the third digital twin to generate instructions for the first component that allow the first component to interact with the second component; and delivering the instructions to the first component.

Due to the size of automation equipment and the investment incurred with building an automation equipment, it is common to investigate a performance of an automation equipment in a simulation prior to building the new automation equipment in reality. In these simulations, representations of objects, which are to be processed by the automation equipment, follow a respective preprogrammed trajectory. In reality, however, a trajectory does not come with an object, but it is the result of a performed action. Thus, pre-programming trajectories is prone to errors, such as assumptions.

It is one object of the present invention to provide a method of simulating an automation action that is suitable for reducing assumption-based modelling errors.

Accordingly, a method for simulating an action performed by an automation device on at least one object in a simulation space is suggested. Therein, each object is defined by an object parameter set that represents at least one physical property of the respective object. The method has at least the following steps: defining an automation volume in the simulation space, which represents an automation interface of the automation device, wherein the automation volume is zero-dimensional to three-dimensional; defining an automation pattern configured for modifying of the parameter set of a respective object based on an input parameter set having at least one input parameter, wherein said automation pattern represents an automation behavior of the automation device; setting to each of the at least one object a respective initial object parameter set; and performing a simulation covering a simulated time. Said performing has at least the following steps: determining, whether the at least one object is contacting the automation volume; and modifying the object parameter set of each object, that is determined to contact the automation volume, according to the automation pattern.

The suggested method imitates a behavior of a real automation device insofar as it simulates that the automation device effects every object that is within the working space of the automation device. Thus, pre-programming a trajectory, a change of shape, and/or a change of a material property is obsolete.

An automation device is represented in two regards in the simulation. The automation volume represents where the automation device effects on objects, and the automation pattern represents how the automation device effects one or more objects.

An object parameter set that represents at least one physical property of the respective object may represent one or more physical properties, or it may represent one or more physical properties and one or more non-physical properties. Examples for a physical property may include a dimension, a size, a weight or mass, a surface condition, a position, and a speed. A non-physical property may include an identifier and/or a trigger value.

Modifying the object parameter set includes modifying a single object parameter, one of multiple object parameters, multiple of more object parameters, and all object parameters, for example. In other words, the method has modifying at least one object parameter of the object parameter set having at least one object parameter.

Setting a respective initial object parameter set to each of the at least one object may preferably be included in a step of defining the at least one object.

A zero-dimensional volume may be a point in a coordinate system, such as a single coordinate set. A one-dimensional volume may be a line or curve in a coordinate system, such as a line defined by two points, a line defined by one point with one vector, a curve defined by a mathematical expression, or the like. A two-dimensional volume may be a plane in a coordinate system, such as a plane defined by three points, a plane defined by one point with one orthogonal vector, a plane defined by a mathematical expression, a straight plane, a curved plane, and/or the like. A three-dimensional volume may be a space in a coordinate system.

The contacting of the respective object and the automation volume may be a geometrically determined contact in a scalarly defined simulation space. That is, for example, a solver may determine whether a mathematical expression describing the object equals a mathematical expression describing the automation volume. Further, the contacting may be spatially determined in a discretely defined simulation space. For example, a solver may preferably determine that there is a contact when a voxel is occupied by both the object and the automation volume. Also, for example, another solver may determine that there is a contact if one voxel is occupied with the object and an adjacent voxel is occupied with the automation volume. These are merely examples of many more ways for determining a contact.

The contacting may for example include at least one an object touching an automation volume, an object intersecting an automation volume, and an object being included in an automation volume. It may depend on the automation device and/or the object how the contacting is determined.

A modifying may preferably include a modifying of an object parameter value per unit time. For example, if the automation pattern reflects a constant speed, the automation pattern may be configured for adding/subtracting a constant value per unit time to/from a value of a position parameter.

The one or more input parameters preferably set or control the amount of modification of the object parameter/-s of the object/-s by the automation pattern. For example, the input parameters of a rotor arm may comprise a spatial position of a pivot in three dimensions, a rotation axis vector, an arm length, a maximum rotation speed, a rotational position around the rotation axis, and a current rotational speed.

According to one option, the method may include within said performing the simulation: updating and/or setting at least one input parameter of the input parameter set of the automation pattern. With this option, the simulation of time-dependent behaviors can be reflected.

According to an option, the method may comprise: defining a sequence of multiple objects, wherein the sequence defines a spatial, temporal, and/or type-related order of the multiple objects. The sequence may be a time-defined series. This option enables a user to simulate and investigate the automation behavior for a sequence and/or bulk of objects. Since the automation volume and the automation pattern are given, a user may initiate the sequence simulation by merely defining different initial object parameters and/or by defining a sub-method for automated defining different initial object parameters.

According to another option, the method may include the steps: defining a range for at least one initial object parameter of at least one object and/or for the spatial, temporal, and/or type-related order. This option enables simulation of industrial processes where multiple objects are concurrently supplied on a slide or belt conveyor. This option again makes use of the effect that a trajectory isn't programmed for each object. Thus, a user may realize this option with very low effort compared to traditional multi-object simulation. According to a beneficial further enhancement, the initial object parameter and/or the order is randomly or pseudo-randomly selected within the defined rage. For most applications, a pseudo-random will be sufficient. Preferably, the initial object parameter and/or the order is automatically randomly and/or automatically pseudo-randomly selected within the defined rage. This enhancement enables a user to simulate an automation performance under varying conditions, thus potentially improving insights from the simulation.

According to another option, the method comprises during said performing the simulation: shifting the definition of the automation volume. Shifting the definition of the automation volume may be changing a position of at least one border or edge of the automation volume. This option allows simulating non-stationary automation devices, such as a robot arm, a pusher, a gripper, a lift, and/or a drill. For example, while a drill is pressed into a workpiece, the place of removal of material translates in the workpiece. For example, if a gripper is moved while gripping an object, the place of the grip is moving i.e., shifting.

According to another option, said performing the simulation includes the step: providing access to at least one input parameter. That is, access to at least one input parameter is provided/granted during simulation for another and/or an external method. As the input parameters preferably are interpreted in combination with the automation pattern, varying input parameters - such as a current position, a current speed, a current depth, a current sensor history, and/or the like - need to be set. If a method already exists for setting a specific input parameter, then it is more efficient to merely provide access to the input parameter for the existing method than re-coding said method. Also, there might be use cases where 3rd party methods need to communicate with the input parameter/-s.

According to still another option, the method may include: defining a control pattern configured for (event-based) modifying of at least one input parameter of at least one automation pattern, wherein the control pattern represents a control behavior if a control device. Preferably, the control pattern is configured for event-based modifying of the at least one input parameter. This option might be used for simulating a control device, such as a programmable logic controller or PLC.

According to another option, the method may be applied for assessing a cooperation, coexistence, comparison, and/or coordination between two automation devices. For increased readability the automation volume may be referred to as a first automation volume, and the automation pattern may be referred to as a first automation pattern. In this regard, the method may further comprise: defining a second automation volume in the simulation space, which represents an automation interface of a second automation device, wherein the second automation volume is zero-dimensional to three-dimensional; defining a second automation pattern configured for modifying of the object parameter set of a respective object based on an input parameter set having at least one input parameter, wherein said second automation pattern represents an automation behavior of the second automation device. Further, for example for cooperation simulation, a distance between the (first) automation volume and the second automation volume preferably may be up to one object size for at least one simulated posture of the first and/or second automation device.

The method may additionally comprise: defining a series connection of at least two automation patterns. Thus, a linking of automation devices may be simulated without pre-programming a trajectory of an object being handled by two or more automation devices one after the other. For example, a path of the object may result from a series of automation patterns. For example, an automation equipment may be composed of a rotating arm, that holds a telescopic arm, which holds a gripper; in this case there may be a series of up to three automation patterns which result, during simulation, in a complex path of the object.

According to another option, the method may be applied for assessing a sensor's behavior in combination with at least one automation device. The method may include: defining a detection volume in the simulation space, which is configured to represent a detection range of a detection device, wherein the detection volume is zero-dimensional to three-dimensional; and defining a detection pattern configured for outputting of a detection signal based on a contact of a respective object with the detection volume; wherein said performing the simulation includes the step: outputting a detection signal according to the detection pattern. This option may be used for simulating an event-based control, for example.

According to another option, the method may include: defining an environmental pattern configured for modifying of the object parameter set of a respective object based on an input parameter set having at least one input parameter, wherein said environmental pattern represents an environmental behavior; wherein said performing the simulation preferably includes the step: modifying the object parameter set of each object according to the environmental pattern. An environmental pattern may be defined for the whole simulation space. For example, gravity may be defined. Thus, for example, it may be achieved that all objects are contacting a ground. This effect may be used for avoiding a drifting behavior, for detecting gaps, and/or for simulating a slide or the like.

According to another option, the method may include: defining at least one environmental volume in the simulation space; and defining an environmental pattern configured for modifying of the object parameter set of a respective object based on an input parameter set having at least one input parameter, wherein said environmental pattern represents an environmental behavior; wherein said performing the simulation preferably includes the step: modifying the object parameter set of each object contacting the environmental volume according to the environmental pattern. This feature might be used when simulating an oven hardening a varnish layer, or when simulating an ice layer growing while a food of some sort is being cooled inside a throughput refrigerator.

According to another option, defining at least one environmental volume in the simulation space; and wherein said performing the simulation preferably includes the steps: determining, whether the at least one object is contacting the environmental volume; and modifying the object parameter set of each object, that is determined to contact the environmental volume, by means of a simulation engine, that is modelled according to physical laws. This option allows to use a complex physics engine for at least one area of the simulation space. Preferably, the step of modifying the object parameter set according to the automation pattern is disabled for any object, which is determined to contact the environmental volume, in order to save computation time.

According to another option, the method may include: defining at least one environment trigger volume, wherein each environment trigger volume is zero-dimensional to three-dimensional; wherein each object parameter set has an environmental trigger object parameter that is switchable between an activated state and a deactivated state; wherein said performing the simulation preferably includes the steps: determining, whether the at least one object is contacting the environment trigger volume; switching the environmental trigger object parameter of each object, that it determined to change from not contacting the respective environment trigger volume to contacting the respective environment trigger volume or from contacting the respective environment trigger volume to not contacting the respective environment trigger volume, between the activated state and the deactivated state; and modifying the object parameter set of each object, that has an activated state of the environmental trigger object parameter, by means of a simulation engine, that is modelled according to physical laws. This option allows to create "windows", between which a movement of the object is determined by a physics engine. Preferably, the step of modifying the object parameter set according to the automation pattern is disabled for any object, which has an activated environmental trigger object parameter, in order to save computation time.

According to another option, the method further includes: selecting a type of the automation device from a list, wherein each listed type is associated with a pre-defined automation pattern. According to this option, a user may select the automation device type from a provided list of automation device types. Then, the method automatically uses the automation pattern, which is associated with the selected automation device type. Thus, a user effort is even further reduced, as the user is not bothered with programming the automation pattern.

Preferably, the list of automation device types includes a linear actuator device, for example any one or more of: a pneumatic linear actuator device, a hydraulic linear actuator device, an electromechanical linear actuator device, a double acting linear actuator device, a single acting linear actuator device, a cylinder type linear actor device, a recirculating ball gear type linear actuator device, a screw gear type linear actuator device, a worm gear type linear actuator device, a belt transmission type linear actuator device, and/or a telescopic linear actuator device. Preferably, the list of automation device types includes a cartesian coordinate robot type actuator device, for example any one or more of: a two-axial cartesian coordinate robot type actuator device and/or a three-axial cartesian coordinate robot type actuator device. Preferably, the list of automation device types includes a gripper or gripping actuator device, for example any one or more of: a double-jaw chuck type gripping actuator device, a double solenoid tool type gripping actuator device, a single solenoid tool type gripping actuator device, and/or a clamp type gripping actuator device. Preferably, the list of automation device types includes a sensor device, for example any one or more of: a photoelectric barrier sensor device, a button type sensor device, and/or a scanner type sensor device, especially a bar code scanner type sensor device, a QR code scanner type sensor device, and/or a RFID scanner type sensor device. Preferably, the list of automation device types includes a rotating table actuator device, especially a single axis table actuator device. Preferably, the list of automation device types includes a multi-axis positioning device, especially a device having at least one translation axis and at least one rotation axis, for example a rotation table device carrying a one-to-three axis cartesian robot device, a one-to-three axis cartesian robot device carrying a rotation table device, a rotation table device carrying a one-to-three axis cartesian robot device carrying a rotation table device, a rotation table device carrying another rotation table device, a rotation table device carrying another rotation table device carrying a one-to-three cartesian robot device, and/or the like. Preferably, the list of automation device types includes a feeder element that is configured to serve as an object source for the simulation. Preferably, the list of automation device types includes a remover element that is configured to serve as an object drain for the simulation. Preferably, the list of automation device types includes a conveyor device, especially a belt conveyor device, a roller conveyor device, a ball roller conveyor device, an active or powered conveyor device, a passive or free conveyor device (also known as free-of-power conveyor device). Preferably, the list of automation device types includes a pusher device.

According to one option, said defining the automation volume may be based on reading a user input, wherein the user input is provided within a graphical representation of the simulation space. Since the user can graphically define the automation volume, for example based on a view of a three-dimensional automation device, the user is not bothered with coding the automation volume. Thus, this option promotes a fast and comfortable data input.

In order to provide a user with a realistic impression of a simulated automation process, it is preferred if the simulation can be recorded and replayed in real time. In order to additionally enable user interaction during the simulation, it is further preferred if the simulation can run in real time.

According to one option, the at least one automation pattern, and, if a control pattern is present, the at least one control pattern, and, if a detection pattern is present, the at least one detection pattern, and, if an environmental pattern is present, the at least one environmental pattern may be configured for real-time simulation, so that the simulation is able to run in real time. This option implies different boundaries depending on the simulation setup. For example, this option defines boundaries for input parameters and time constants such as eigenvalues.

According to one option, the at least one automation pattern, and, if a control pattern is present, the at least one control pattern, and, if a detection pattern is present, the at least one detection pattern, and, if an environmental pattern is present, the at least one environmental pattern may be algebraically formulated. That is, the patterns are algebraic equations under this option. As algebraic equations are time-invariant (the result of algebraic equation may be time-dependent if time is one variable of the respective equation), this option offers one way to provide a user with a real time capable simulation. An additional benefit is that algebraic equations can usually be set up fast. Preferably, the object definition as well as the automation pattern and, if present, the control pattern and/or environmental pattern, are free from differential equations.

According to a preferred option, the suggested method may be a method for simulating a manipulation performed by a conveyance device on the at least one object. In this case, the action may be a conveyance action, wherein the object may be an object to be conveyed, wherein the automation device may be a conveyance device, wherein the automation volume may be a manipulation volume, wherein the automation interface may be a manipulation interface, wherein the automation pattern may be a conveyance pattern, and wherein the automation behavior may be a conveyance behavior. The conveyance device is configured for any type of conveying. A material handling device is a preferred conveyance device. A material handling action is a preferred conveyance action. The object to be conveyed is preferably an object to be handled or material-handled. A material handling pattern is a preferred conveyance pattern. The conveyance behavior preferably is a material handling behavior. In other words, automation comprises conveyance, and conveyance comprises material handling.

The invention may be described in fewer words as: a method of simulating an action performed by an automation device on at least one object in a simulation space, wherein each object is defined by an object parameter set that represents at least one physical property of the respective object, the method comprising: defining an automation volume in the simulation space, which represents an automation interface of the automation device; defining an automation pattern, which represents an automation behavior of the automation device; setting a respective initial object parameter set to each of the at least one object; and performing a simulation covering a simulated time, including the steps: determining, whether the at least one object is contacting the automation volume; and modifying the object parameter set of each object, that is determined to contact the automation volume, according to the automation pattern.

According to a further aspect, the invention relates to a computer program product comprising instructions which, when the program is executed by a computer, cause the computer to carry out the above-described method.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows schematically a flow diagram of a method according to an embodiment of the invention;
- Fig. 2: shows schematically a simulation space having a feeder element, a belt conveyor element, an automation volume, and an object entering the automation volume during a simulation performed within a method according to an embodiment of the invention;
- Fig. 3: shows schematically the simulation space of Fig. 2 having the elements shown in Fig. 2 and a robot arm element having a gripper element that grips the object during a simulation performed within the method according to the embodiment of the invention; and
- Fig. 4: shows schematically an execution cycle of the simulation performed within the method according to the embodiment of the invention.

In the Figures, like reference numerals designate like or functionally equivalent elements, unless otherwise indicated.

A method 10 according to the embodiment of the invention for example has a preparatory phase having steps S10 to S40, a step S42 of performing a simulation having steps S44 to S58, and a terminal output step S62.

The method 10 is a method for simulating an action performed by an automation device on at least one object in a three-dimensional simulation space.

The method 10 of the embodiment is a computer-implemented method. However, it is possible to perform the whole method 10 and/or at least parts thereof analogously. For example, the method 10 may be analogously performed in a framework of an education and/or engineering discussion. For example, the method may be realized as a computer program, which for example may be a stand-alone computer program or a plug-in or extension or adaptation of an existing computer program.

The method 10 has an optional first step S10, wherein a user selects a type of an automation device from a list. Each listed type is associated with a pre-defined automation pattern. For example, the computer program may present a list with selectable items to a user, from which the user can choose the type of the automation device.

In a next step S12, an automation volume is defined in a simulation space. The simulation space preferably is three-dimensional, however a one-dimensional or two-dimensional simulation space may be adequate too, especially for early project stages. The simulation space may preferably be or have a cartesian coordinate system. Alternatively, the simulation space may preferably be or have a cylindrical coordinate system and/or a spherical coordinate system. The simulation space may comprise additional elements, such as a physics engine for computing movements, environmental effects, a defined and/or definable shop floor geometry, and/or the like.

The automation volume may be defined by inputting numbers representing one or more corner coordinates, a center coordinate, a length, a width, a height, one or more radii, a direction, an inclination, and/or the like.

One preferred way of defining the automation volume is executing an optional step S14. In S14, a user input is read. For example, a user may provide the user input within a graphical representation of the simulation space. In one example, a user may click on coordinates for inputting corners of the automation volume. In one example, a user may use a volume definition routine of a 2D-CAD or 3D-CAD environment. In one preferred example, a user may construct and/or import a geometry of the automation device an select a surface and/or another element of the geometry as the automation volume or as a part of the definition of the automation volume. For example, a user may click on a surface of the geometry of the automation device, and a three-dimensional automation volume is automatically created based on this surface and a default width in a direction orthogonal to said surface.

The automation volume represents an automation interface of the automation device, that is to be simulated. The automation interface may preferably be a part and/or surface of the automation device that is prepared to interact with another object.

The automation volume may preferably be one of the types: a point, a line, a curve, a straight or curved plane, and/or a volume, such as a cuboid, a sphere and/or a more complex shape.

In reality, the automation interface is usually shaped to fit an automation purpose of the automation device, such as a conveyor purpose, a drilling purpose, and/or the like. This may optionally be reflected in the computer program in such a way that the type of the automation volume is associated with the selected type of the automation device to be simulated.

In a next step S16, an automation pattern is defined. The automation pattern is a pattern for modifying an object parameter set of a respective object based on an input parameter. The automation pattern represents an automation behavior of the automation device to be simulated.

In other words, the automation pattern may be a scheme or rule, which controls a modification of an object parameter from a given input parameter or from a given input parameter and a given time.

As an example, a belt conveyer running with a constant speed is considered. In this case, an input parameter set may include the speed and a conveyor direction. For example, if a time step width is given, then an input parameter set may include a displacement per time step and the direction.

For example, objects may be defined by an object parameter set having three coordinates indicating a position of a center of the respective object. Then, the automation pattern set may be three displacements, which can be added to the three coordinates for each time step. Of course, a displacement can have the value zero indicating no movement in the corresponding direction.

In an optional step S18, a user may select a type of a second automation device from a list.

In an optional next step S20, a second automation volume is defined in the simulation space. The second automation volume represents an automation interface of the second automation device. The second automation volume, too, may be any volume from a point to a three-dimensional shape.

Preferably, the definition of the second automation volume is based on an optional step S22. In step S22, the method reads a user input provided via a graphical representation of the simulation space.

Then, in an optional next step S24, a second automation pattern is defined. The second automation pattern, too, is configured for modifying of the object parameter set of a respective object based on an input parameter set having at least one input parameter. The second automation pattern represents an automation behavior of the second automation device.

That is, steps S10 to S16, which are performed for the first automation device, are preferably repeated as steps S18 to S24 for the second automation device. However, the steps for defining the second automation volume / pattern may in detail differ from the steps for defining the first automation volume / pattern.

The steps S18 to S24 may optionally be repeated multiple times for further automation devices.

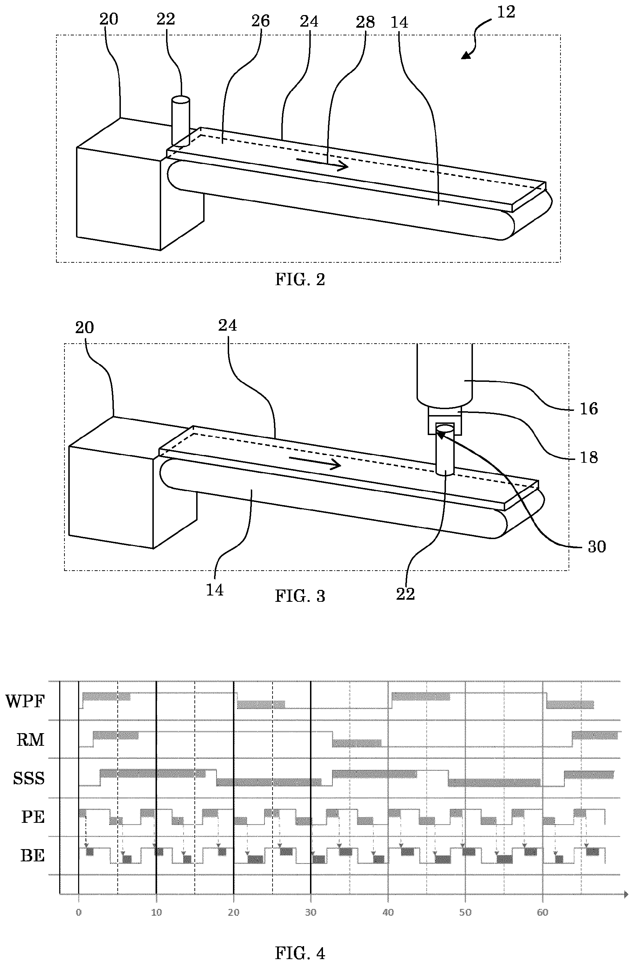

In an optional next step S26, a series connection the automation patterns is defined. For example, in Fig. 3 is shown a gripping element attached to an arm element. Both automation devices, a gripping device and an arm device, are for example reflected as automation patterns. The automation pattern of the gripping element for example may effect that a change of a position of the gripping element is transferred (with an offset) to a position an object when an input parameter to the gripping pattern indicates that the gripping device is gripping an object. The automation pattern of the arm element for example may effect a position change of a distal end of the arm element. The series connection for example may be a link such that a position change of the gripping element is defined by a position change of the distal end of the arm element.

As another example, a first arm holding a second arm is considered. The series connection for example may be a superposition of the automation pattern of the second arm with the automation pattern of the first arm.

Then, in a next step S28, at least one object is defined. Preferably, the object is defined by setting an initial object parameter set for the object. After defining, the object has the initial object parameter set.

The term "initial" object parameter does not imply that this object parameter muss get changed. For example, an initial position parameter indicating a position of an object will most probably get changed during a simulation run. For example, an initial object type parameter indicating a type of an object will most probably not get changed during a simulation run. Thus, the term "initial" preferably refers to a time when a certain object parameter set has been set.

Step S28 may be repeated for every object to be used during the simulation.

However, if the simulation is to cover more than one object, said defining in S28 may optionally include a step S30 of defining a sequence of multiple objects. The sequence defines a spatial, temporal and/or type-related order of the multiple objects. That is, the sequence may be a list of when and where which type of object enters the simulation space during simulation, for example.

Further, said defining in step S28 may optionally include a step S32. In step S32, a range is defined for at least one initial object parameter of the at least one object and/or for a spatial, temporal, and/or type-related order defined in step S30. Thus, a user may control a variation of where and when an object of which type, of what size and under which orientation enters the simulation space, for example. The range preferably is a value range, such as an area instead of a single position, but it may also preferably be a list, such as a list of object types. It is to be noted that the "range" option may advantageously be combined with the "sequence" option, but it may also advantageously be combined with a manual defining of the (other) initial object parameters of the at least one object, for example.

When there is set a range for an initial object parameter and/or for the spatial, temporal, and/or type-related order in step S32, then the value of the initial object parameter and/or the specific order is preferably automatically selected as a random value / order within the set / defined range. For most applications it will probably be sufficient, if the value and/or order is pseudo-randomly selected.

A user might want to include a sensor device into the investigation. In order to do so, the method may optionally have steps S34 and S36.

In step S34, a detection volume is defined in the simulation space. The defining of the detection volume is preferably done the same way as the defining of the automation volume in steps S12, S14, S20, and S22. The detection volume represents a detection range of a detection device. The detection volume is zero-dimensional to three-dimension, such that it may preferably be one of the types: a point, a line, a curve, a straight or curved plane, and/or a volume, such as a cuboid, a sphere and/or a more complex shape.

In a next step S36, a detection pattern is defined. The detection pattern is configured such that a detection signal is outputted if a respective object contacts the detection volume in simulation. Said contact may be at least one of: a touching the detection volume by the object, an intersecting of the object and the detection volume, and/or the respective object being spatially included in the detection volume, each during the course of the simulation. Depending on the type of sensor device / detection device, which is modelled / represented, the detection signal may be indicative of a type of the respective detected object, a number of the respective detected object/objects, an identifier of the respective detected object, a position of the respective detected object, and/or the like.

The steps S34 and S36 may be repeated, if there are further detection devices to be regarded in the simulation. Alternatively and/or additionally, one or more detection devices may be modelled according to the steps S18 to S24 and/or according to the steps S20 with S24.

In an optional next step S38, one or more control pattern/-s may be defined. Each control pattern is configured for modifying at least one input parameter of at least one of the automation patterns defined in S16 and S24. Each control pattern represents a control behavior of a control device. For example: if a complex control device having multiple control behaviors is modelled, then preferably multiple control patterns may be defined. This step S38 may include importing a control pattern from an external method and/or an external software, such as a PLC design software. The control pattern preferably represents a closed loop control. However, a control pattern is not necessary, as a merely time-based program or a non-controlled and/or constant automation behavior may be set up without any control pattern, to name a few examples. Further, a control may in some implementations be exerted in other ways than modifying input parameters of the automation pattens.

In an optional next step S40, an environmental pattern may be defined. The environmental pattern may represent a global and/or local effect on objects. Preferably, a gravity is defined as an environmental pattern. Other preferred environmental patterns may reflect an ambient temperature, a deposition behavior, a dissipating and/or dissolving behavior, and/or the like.

In a next step S42, a simulation is performed. In the case of the embodiment, mass effects are neglected and all patterns, that is the at least one automation patterns, the optional control pattern/-s, the optional detection pattern/-s, and the optional environmental pattern/-s, are formulated in algebraic form.

The simulation is performed by repetitive performing step S42. At the beginning of step S42, a new timing or point of time may preferably be set, which is one time step after the previous timing.

Within the simulation of S42, an optional step S44 is performed. In step S44, at least one input parameter of the at least one input parameter set/-s is updated. Within this step, for example, a time-dependent function may be evaluated in order to update an input parameter to an automation pattern, a control pattern, and/or the like.

Next, in an optional step S46 during the simulation, i.e. within step S42, access to at least one input parameter is provided. That is, an external method may amend at least one input parameter at this point. This option may be used to combine this method 10 with an external function or method, such as an encrypted 3^{rd} party software module. Another use case may be a previously written computer program under a different programming language.

Immobile automation devices, such as conveyor belts, magnetic fields, sensor devices, and/or the like often have a time-invariant automation interface. Thus, for these automation devices, an automation volume may remain unchanged during the simulated time.

However, there also are mobile automation devices. A mobile automation device in this case may be an automation device having a time-variant automation interface. Examples for mobile automation devices may include a pusher, which moves during a pushing action, and a manipulator arranged at a distal end of a robot arm. For example, for these automation devices, in an optional step S48, the respective definition of the automation volume is shifted. In other words, if an automation interface is movable, then its position is updated or checked and updated in S48.

Next is a step S50, which is performed during said performing of the simulation in S42. In S50, every contact is determined between any one object and any automation volume, detection volume, and environmental volume.

Next during said performing the simulation in S42 is a step S52. In step S52 the object parameter set of every object, which contacts any one automation volume, is modified according to the automation pattern of the respective automation volume. That is, if an object contacts an automation volume, which belongs to a belt conveyor device, then the object parameter set of this object is modified as given per the automation pattern, which reflects the material handling behavior of said belt conveyor device.

The following example is considered: an object is being fed in a x-direction on top of a belt of a belt conveyor device and it is at the same time being pushed by a pusher device in a y-direction orthogonal to the x-direction. In step S42, a value corresponding to a translation of the belt during the time step is added into an object parameter reflecting a x-position of the object. Further, in step S42, a value corresponding to a translation of the pusher during the time step is added into an object parameter reflecting a y-position of the object.

Next during the simulation in S42 is an optional step S54 of outputting a detection signal according to the detection pattern. That is, if it is detected, for example in S50 or in S54, that any objects contacts the detection volume defined in S34, then a detection signal is outputted in S54 according to the detection pattern defined in S36.

Next during the simulation in S42 is an optional step S56. In S56, the environmental pattern defined in S40 is applied. That is, for example, that for every object it may be determined, whether the environmental pattern is applicable. For example, an environmental pattern reflecting gravity is usually applicable to every object. For example, an environmental pattern reflecting an ambient temperature might be applicable only to a certain part of the simulation volume.

A next optional step S58 during the simulation in S42 concerns a display of the simulation. In S58, a display of the simulation is refreshed.

Then, during the simulation of S42, comes an optional step S60. In S60, the simulation is recorded. For example, the object parameter set / sets and/or the input parameter set / sets are preferably recorded for later analysis.

After S60, the simulation step S42 preferably restarts, and/or the method 10 goes back to step S44 for a new time step.

If a pre-set simulation time is over, and/or if a user terminates the simulation, and/or if a pre-set termination event occurs, the simulation in S42 is terminated.

Afterwards, in an optional step S62, the record from step S60 and/or another result from the simulation is outputted.

The Figs. 2 and 3 show a simulation space 12, which is three-dimensional. For example, the simulation space 12 is defined in cartesian coordinates.

In Figs. 2 and 3, there are shown representations of three automation devices, which are a belt conveyor device 14, a robot arm device 16, and a gripper device 18.

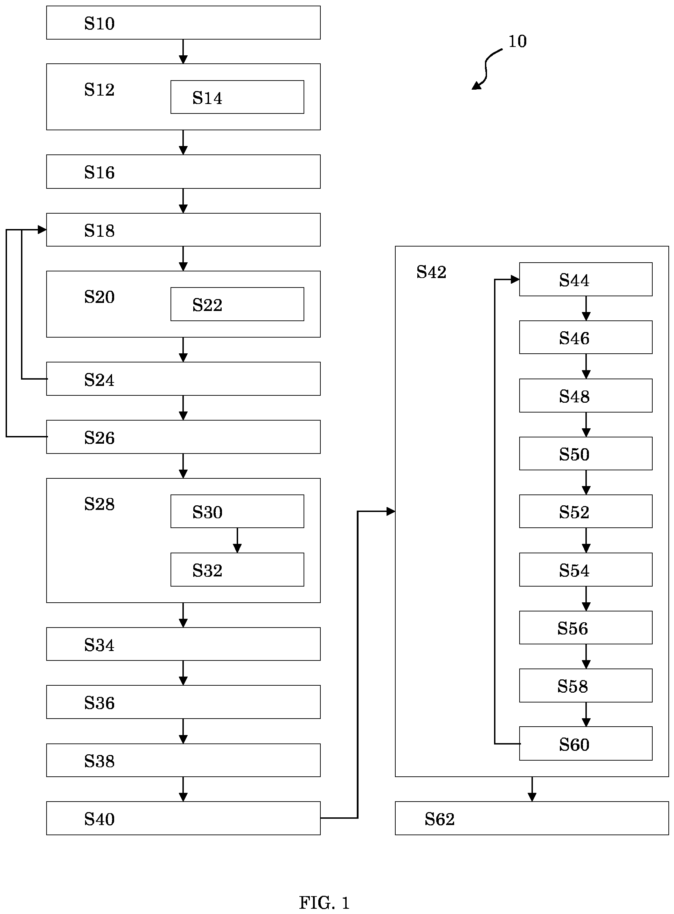

Further, in Figs. 1 and 2 is shown a feeder element 20. The feeder element 20 creates objects, such as a cylinder object 22. The feeder element 20 thus usually does not represent a specific type of automation device. Rather, the feeder element 20 generically represents any automation device that produces and/or supplies one or more objects 22. In other words: In order to investigate a conveying device, such as the belt conveyor device 14 in Figs. 1 and 2, the feeder device 20 may be employed acting as a low effort source of objects.

In an exemplary run of the method 10 according to the embodiment, a user may select in S10 a belt conveyor type automation device. Then, in S12, the user may define an automation volume 24 by inputting a belt top face 26 of the belt conveyor device 14, which input is read in S14. Then, in S16, an automation pattern is defined, which is set according to a conveying behavior of the belt conveyor device 14, and which is symbolized by an arrow 28 in Fig. 1.

Likewise, in steps S18 to S24, the feeder element 20, the robot arm 16, and the gripper 18 are repeatedly defined in the simulation space 12. Therein, an automation pattern of the feeder element 20 may be configured to feed the objects 22 towards the automation volume 24 of the belt conveyor device 14 during simulation.

Then, in S26, a series connection may be defined, which may consist of the robot arm device 16 and the gripper device 18, for example.

Then in step S28, the object type of the cylindrical object 22 is defined.

If one wanted to investigate a behavior of the automation devices 14, 16, 18 while conveying multiple objects, a user might repeatedly define objects 22 in step S28, and/or a user might define a sequence of objects in step S30, for example. Further, in S32, a range of origin of the objects 22 may be specified, such that the objects 22 appear at different locations on top of the feeder element 20, for example.

In the case of this example, a detection device is not simulated, such that the steps S34 and S38 are skipped. However, in order to time a gripping of the object 22 by the gripper device 18, a control pattern may be set up in S38. Further, an environmental pattern may be set up during S40.

Next is the simulation in S42. In this example, steps S44 to S48 are skipped.

In S50, it is determined that the object 22 comes into contact with the automation volume 24 of the belt conveyor device 14. Thus, in S52 the automation pattern 28 of the belt conveyor device 14 is applied to the object parameter set of the object 22. That is, at least one of the object parameters of the object parameter set is modified.

For illustration purposes, the following simple example may be considered: The belt conveyor device 14 conveys the object 22 e.g. in a y-direction. In this case, the position parameters of the object may be noted as a vector P_{obj pos} = [2, 3, 4], the automation pattern may be a vector of V_{au_patt} = [0, 1, 0], and an input parameter indicating the speed of the conveyor belt may be i = 0,3. Then, in S52, the position parameters of the object 22 may be modified according to the algebraic formula: P_{obj_pos,new} = P_{obj_pos,current} + i*V_{aut_patt} such that the next position parameters of the object may be noted as a vector P_{obj_pos} = [2, 3.3, 4].

During the next loop of S42, the object 22 is still determined to be in contact with the automation volume 24, for example. Thus, the object parameter set would again be modified according to the set automation pattern and the input parameter/-s.

In the example shown in Figs. 2 and 3, after multiple loops, the object 22 is in a position where it is to be gripped by the gripper device 18. The act of gripping is timed, for example, by the control pattern defined in S38. The act of gripping is preferably realized in the simulation by the object 22 coming into contact with a automation volume 30 defined at the gripper device 18. Then, the modification according to the automation pattern of the gripper device 18 overwrites the object parameters, which indicate the position of the object 22, in each S52 as long as the object 22 is gripped.

A lifting movement of the object 22 by the robot arm device 16 may be realized as follows: a series connection of the automation patterns of the robot arm device 16 and the griper device 18 is defined in S26. Thus, for example, position object parameters of the distant end of the robot arm device may be configured as position input parameters to the automation pattern of the gripper device 18. A movement of the robot arm device 16 is simulated by modifying the object parameters of the robot arm device in S52. Thus, the position of the gripper device 18 changes in every loop of S42. Thus, in S48 the automation volume 30 of the gripper device 18 is shifted. Thus, the modified position of the object 22 stays in contact with the automation volume 30 of the gripper device 18, which allows a continuous movement over multiple loops of S42.

Now, reference is made to, a computation timing chart shown in Fig. 4. The horizontal axis refers to a real time that passes while the simulation in S42 is performed. The horizontal axis is given in milliseconds [ms].

A top row of the diagram is labelled "WPF" and shows a computation timing of a UI frame, which is run in a main thread (also referred to as an UI thread). In the displayed example, the UI frame is run every 20ms and the corresponding computation took about 6ms in this example.

A next row of the diagram is labelled "RM" and shows a computation timing of a recording manager. The recording manager may for example be a virtual frame, that may preferably be executed 32 times per second. Thus, in this example, the recording manager is executed every ~ 31ms (preferably every 31.258ms). The corresponding computation took about 6ms in this example.

A next row of the diagram is labelled "SSS" and shows a computation timing of a shape script sequence. In this example, the shape script sequence ran at a user-specified frequency of 66.6Hz. Thus, it was executed every 15ms and the corresponding computation took about 14ms.

A next row of the diagram is labelled PE and shows a computation timing of a physics engine. The physics engine may be responsible for collision checking, for example. In the example case, the physics engine was executed every 4ms, and the corresponding computation took about 1.5ms.

A next row of the diagram is labelled BE and shows a computation timing of a behavioral engine, which is the step S42. The behavioral engine may preferably be executed subsequent to any of the above threads WPF, RM, SSS, or PE. However, as the PE is the most frequent of these threads, the behavioral engine is preferably executed subsequent to the PE thread. As Fig. 4 shows, the computation of the behavioral engine took between 1ms and 2ms, for example. As these numbers show, the behavioral engine was computed in up to 2ms which each covered a 4ms slot of simulation time. That is, the described method 10 simulated the behaviors of the respective automation devices in real time.

Although the present invention has been described in accordance with preferred embodiments, it is obvious for the person skilled in the art that modifications are possible in all embodiments.

### Reference Numerals:

- 10: method of simulating an action performed by an automation device on at least one object in a simulation space
- 12: simulation space
- 14: belt conveyor device
- 16: robot arm device
- 18: gripper device
- 20: feeder element
- 22: cylindrical object
- 24: automation volume
- 26: belt top face
- 28: automation pattern
- 30: automation volume
- S10: selecting a type of an automation device from a list
- S12: defining a first automation volume in a simulation space
- S14: reading a user input
- S16: defining a first automation pattern
- S18: selecting a type of a second automation device from a list
- S20: defining a second automation volume in the simulation space
- S22: reading a user input
- S24: defining a second automation pattern
- S26: defining a series connection of two automation patterns
- S28: defining at least one object
- S30: defining a sequence of multiple objects
- S32: defining a range for at least one initial object parameter
- S34: defining a detection volume in the simulation space
- S36: defining a detection pattern
- S38: defining a control pattern
- S40: defining an environmental pattern
- S42: performing a simulation
- S44: updating input parameters
- S46: providing access to an input parameter
- S48: shifting the definition of an automation volume
- S50: determining whether an object is contacting an automation volume
- S52: modifying the object parameter set of each object that contacts an automation volume according to the automation pattern
- S54: outputting a detection signal according to a detection pattern
- S56: applying environmental patterns
- S58: refreshing display
- S60: recording simulation
- S62: outputting results

## Claims

1. A method (10) of simulating an action performed by an automation device (14, 16, 18, 20) on at least one object (22) in a simulation space (12), wherein each object (22) is defined by an object parameter set that represents at least one physical property of the respective object (22), the method (10) comprising:
defining (S12) an automation volume (24, 30) in the simulation space (12), which represents an automation interface of the automation device (14, 16, 18, 20), wherein the automation volume (24, 30) is zero-dimensional to three-dimensional;
defining (S16) an automation pattern (28) configured for modifying the object parameter set of a respective object (22) based on an input parameter set having at least one input parameter, wherein said automation pattern (28) represents an automation behavior of the automation device (14, 16, 18, 20);
setting (S28) a respective initial object parameter set to each of the at least one object (22); and
performing (S42) a simulation covering a simulated time, including the steps:
determining (S50), whether the at least one object (22) is contacting the automation volume (24, 30); and
modifying (S52) the object parameter set of each object (22), that is determined to contact the automation volume (24, 30), according to the automation pattern (28).

2. The method (10) of claim 1, further comprising:
defining (S30) a sequence of multiple objects (22), wherein the sequence defines a spatial, temporal, and/or type-related order of the multiple objects (22).

3. The method (10) of any preceding claim, further comprising:
defining (S32) a range for at least one initial object parameter of at least one object (22) and/or for the spatial, temporal, and/or type-related order,
wherein the initial object parameter and/or the order is randomly and/or pseudo-randomly selected within the defined rage.

4. The method (10) of any preceding claim, wherein said performing (S42) the simulation includes:
shifting (S48) the definition of the automation volume (24, 30).

5. The method (10) of any preceding claim, wherein said performing (S42) the simulation includes:
providing (S46) access to at least one input parameter.

6. The method (10) of any preceding claim, further comprising:
defining (S38) a control pattern configured for modifying at least one input parameter of at least one automation pattern (28), wherein the control pattern represents a control behavior of a control device.

7. The method (10) of any preceding claims, further comprising:
defining (S20) a second automation volume (30) in the simulation space, which represents an automation interface of a second automation device (18), wherein the second automation volume (30) is zero-dimensional to three-dimensional;
defining (S24) a second automation pattern configured for modifying of the object parameter set of a respective object (22) based on an input parameter set having at least one input parameter, wherein said second automation pattern represents an automation behavior of the second automation device (30).

8. The method (10) of any preceding claim, further comprising:
defining (S26) a series connection of at least two automation patterns.

9. The method (10)of any preceding claim, further comprising:
defining (S34) a detection volume in the simulation space (12), which represents a detection range of a detection device, wherein the detection volume is zero-dimensional to three-dimensional; and
defining (S36) a detection pattern configured for outputting a detection signal based on a contact of a respective object (22) with the detection volume;
wherein said performing (S42) the simulation includes the step:
outputting (S54) a detection signal according to the detection pattern.

10. The method (10) of any preceding claim, further comprising:
selecting (S10, S18) a type of the automation device (14, 16, 18, 20) from a list, wherein each listed type is associated with a pre-defined automation pattern (28).

11. The method (10) of claim 10, wherein said defining said automation volume (24, 30) is based on reading (S14, S22) a user input, that is provided within graphical representation of the simulation space (12).

12. The method (10) of any preceding claim, wherein the at least one automation pattern (28) and, if a control pattern is present, the at least one control pattern and, if a detection pattern is present, the at least one detection pattern are configured for real-time simulation,

13. The method (10) of any preceding claim, wherein the at least one automation pattern (28) and, if a control pattern is present, the at least one control pattern and, if a detection pattern is present, the at least one detection pattern are algebraically formulated.

14. The method (10) for simulation a manipulation performed by a material handling device on the at least one object (22) according to any preceding claim,
wherein the action is a material handling action, wherein the object is an object to be handled, wherein the automation device is a material handling device, wherein the automation volume is a manipulation volume, wherein the automation interface is a manipulation interface, wherein the automation pattern is a material handling pattern, and wherein the automation behavior is a material handling behavior.

15. A computer program product comprising instructions which, when the program is executed by a computer, cause the computer to carry out the method (10) of one of claims 1 - 14.
